# EUROPÄISCHE PATENTSCHRIFT

(11) **EP 3 181 422 B1**
(45) Veröffentlichungstag und Bekanntmachung des Hinweises auf die Patenterteilung: **29.07.2020**
(21) Anmeldenummer: 16199171.6
(22) Anmeldetag: 16.11.2016
(51) Int. Cl.: B60W 30/165, G05D 1/02, G08G 1/16

(54) **VERFAHREN UND SYSTEM ZUR AUTOMATISCHEN STEUERUNG EINES FOLGEFAHRZEUGS MIT EINEM SCOUT-FAHRZEUG**
METHOD AND SYSTEM FOR AUTOMATICALLY GUIDING A FOLLOW VEHICLE WITH A SCOUT VEHICLE
PROCÉDÉ ET SYSTÈME DE COMMANDE AUTOMATIQUE D'UN VÉHICULE SUIVEUR COMPRENANT UN VÉHICULE SCOUT

(30) Priorität: 15.12.2015 DE 102015225242
(43) Veröffentlichungstag der Anmeldung: 21.06.2017
(73) Patentinhaber: VOLKSWAGEN AKTIENGESELLSCHAFT, 38440 Wolfsburg (DE)
(72) Erfinder: Darms, Michael, 38165 Lehre (DE); Meinecke, Marc-Michael, 38524 Sassenburg (DE); Bartels, Arne, 38448 Wolfsburg (DE); Junge, Lutz, 38106 Braunschweig (DE)

(56) Entgegenhaltungen:
- DE-A1- 19 949 448
- DE-A1-102012 208 256
- DE-A1-102012 212 681
- US-A1- 2015 177 007

## Beschreibung

Die vorliegende Erfindung betrifft ein Verfahren zur automatischen Steuerung zumindest eines Folgefahrzeugs. Sie betrifft ferner ein System zur automatischen Steuerung zumindest eines Folgefahrzeugs mit einem Scout-Fahrzeug.

Zur Steigerung der Effizienz und Sicherheit im Verkehr und in der Logistik, insbesondere beim Transport von Gütern, aber auch im Personentransportwesen, wird eine weitreichende Automatisierung von Fahrzeugen angestrebt. Dazu sind bereits Techniken bekannt, die durch automatische Eingriffe auf verschiedenen Ebenen in die Steuerung eines Fahrzeugs den Fahrer entlasten oder einzelne Fahrmanöver vollautomatisch durchführen. Dies reicht bis zu einer Fernsteuerung oder dem autonomen Abfahren einer Route durch ein Fahrzeug.

Die DE 10 2005 059 517 A1 beschreibt ein solches System zum Führen und Operieren eines Fahrzeugs ohne Fahrer, wobei Daten von Sensoren des Fahrzeugs zu einer Einsatzzentrale weitergeleitet werden und von der Einsatzzentrale Einsatzdaten zur Steuerung des Fahrzeugs auf dieses übertragen werden. Dabei wird eine Datenübertragung zwischen Fahrzeug und Einsatzzentrale in annähernder Echtzeit vorausgesetzt beziehungsweise eine eventuell auftretende Zeitverzögerung wird technisch kompensiert.

Bei dem in der DE 10 2013 212 255 A1 beschriebenen Verfahren überprüft ein erstes Fahrzeug mit einer Sensorik einen Raum relativ zum ersten Fahrzeug und überträgt das Ergebnis der Überprüfung an ein zweites Fahrzeug. Dadurch kann diesem beispielsweise mitgeteilt werden, ob ein Raum in der Umgebung des ersten Fahrzeugs frei ist und ob ein Einscheren durchgeführt werden kann.

Bei dem in der DE 10 2013 225 011 A1 beschriebenen Verfahren wird in einem hochautomatisiert fahrenden Kraftfahrzeug die eigene Position mit externen Daten über eine aktuelle Verkehrssituation abgeglichen und entschieden, ob eine Änderung des Fahrzustands erforderlich ist. Insbesondere wird erkannt, ob das Fahrzeug auf ein Hindernis oder einen anderweitig nicht automatisch befahrbaren Streckenabschnitt zufährt. Dies kann etwa zum Abbruch der automatisierten Fahrt führen. Beispielsweise kann eine Sperrung eines vor dem Fahrzeug liegenden Streckenabschnitts für die automatisierte Fahrt verarbeitet werden oder es kann eine Staumeldung zum rechtzeitigen Abbruch der hochautomatisierten Fahrt dienen.

Die DE 10 2012 212 681 A1 beschreibt ein Verfahren zum autonomen Geleiten von Fahrzeugen, die entlang einer Route fahren, wobei ein Leitfahrzeug mit mindestens einem Folgefahrzeug in Kommunikation steht. Das mindestens eine Folgefahrzeug empfängt eine Kommunikation in Bezug auf eine Zielversatzposition und Routendaten. Nachführungsdaten werden erzeugt und von Borderfassungsvorrichtungen des mindestens einen Folgefahrzeugs abgeleitet, die einen zurückgelegten Weg des Leitfahrzeugs umfassen, der durch das mindestens eine Folgefahrzeug erfasst wird. Die Routendaten werden mit den Nachführungsdaten zum Identifizieren einer Genauigkeit zwischen den Routendaten relativ zu den Nachführungsdaten verglichen. Eine eingestellte Zielversatzposition und ein Satz von Trajektorientpunkten, der einen Trajektorienfahrweg von einer aktuellen Position des mindestens einen Folgefahrzeugs zur eingestellten Zielversatzposition vorsieht, werden auf der Basis der Genauigkeit zwischen den Routendaten und den Nachführungsdaten bestimmt.

Eine zentrale Voraussetzung für den sicheren Betrieb derartiger Systeme ist eine hohe Redundanz bei den verwendeten Sicherungsvorkehrungen. Typischerweise setzt die automatische Durchführung eines Fahrmanövers die Anwesenheit eines Fahrers voraus, der die Bewegung des Fahrzeugs überwacht und korrigierend eingreifen kann. Dies beugt insbesondere Fehlfunktionen des Systems vor, etwa bei defekten Sensoren oder in ungewöhnlichen Verkehrssituationen. Es ist in diesem Fall also kein vollständig automatisches Fahren implementiert, sondern ein assistiertes Fahren. Der Automatisierungsgrad ist dabei an die technische Ausführung des Systems, insbesondere an die vorgesehenen Redundanzen, angepasst.

Soll das System vollständig automatisch betrieben werden, also ohne dass für jedes Fahrzeug ein Fahrer vorgesehen ist, so müssen hochgradige Redundanzen auf technischer Ebene vorgesehen sein. Dies wird etwa durch den Einbau einer Vielzahl von - teils mehrfach ausgelegten - Sensoren im Fahrzeug erreicht. Dabei sind allerdings die Möglichkeiten der Integration von Sensoren in einem Fahrzeug räumlich beschränkt, ferner können beträchtliche Zusatzkosten entstehen.

Der vorliegenden Erfindung liegt die Aufgabe zugrunde, ein Verfahren und ein System der eingangs genannten Art bereitzustellen, bei denen eine zu einem hohen Grad automatisierte Steuerung erreicht wird.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird für ein Scout-Fahrzeug eine Scout-Trajektorie erzeugt und das Scout- Fahrzeug wird entlang der Scout-Trajektorie geführt. Dabei werden mittels Scout-Sensoren Scout-Umgebungsdaten erfasst. Für das Folgefahrzeug wird eine Soll-Trajektorie erzeugt und mittels Folgefahrzeug-Sensoren werden Folgefahrzeug-Umgebungsdaten erfasst. Anhand der Scout-Trajektorie werden Referenz-Trajektoriendaten erzeugt und anhand der Scout-Umgebungsdaten werden Referenz-Umgebungsdaten erzeugt. Die Referenz-Trajektoriendaten und die Referenz-Umgebungsdaten werden an das Folgefahrzeug übertragen und durch einen Trajektorienvergleich wird anhand der erzeugten Soll-Trajektorie und der übertragenen Referenz-Trajektoriendaten eine Trajektorienähnlichkeit bestimmt, wobei quantifiziert wird, ob und wie stark sich die Soll-Trajektorie und die Scout-Trajektorie unterscheiden. Durch einen Umgebungsdatenvergleich anhand der erfassten Folgefahrzeug-Umgebungsdaten und der übertragenen Referenz-Umgebungsdaten wird eine Umgebungsähnlichkeit bestimmt und in Abhängigkeit von der Trajektorienähnlichkeit und der Umgebungsähnlichkeit wird eine automatische Steuerung des Folgefahrzeugs entlang der Soll-Trajektorie aktiviert.

Die zu befahrende Strecke wird also in mehreren Stufen auf ihre Befahrbarkeit überprüft. Durch die Kombination eines Scout-Fahrzeugs, das über die automatische Befahrbarkeit einer Trajektorie entscheidet, und eines Folgefahrzeugs, das die Daten des Scout-Fahrzeugs beim Befahren überprüft, wird vorteilhafterweise eine hohe Redundanz und damit eine hohe Sicherheit erreicht. Es wird überprüft, ob die Soll-Trajektorie, die automatisch vom Folgefahrzeug befahren werden soll, einer zuvor als automatisch befahrbar bewerteten Trajektorie entspricht, und es wird laufend überprüft, ob sich die Bedingungen auf der Strecke seit dem Befahren durch das Scout-Fahrzeug geändert haben, ob also eine zuvor automatisch befahrene Strecke auch weiterhin sicher automatisch befahren werden kann.

Als "Trajektorie" wird erfindungsgemäß ein Bewegungspfad bezeichnet, entlang dessen eines der beteiligten Fahrzeuge fahren kann. Insbesondere können darunter tatsächlich gefahrene und geplante Bewegungspfade verstanden werden. Insbesondere kann die Trajektorie beliebig lang oder kurz sein, beispielsweise kann sie einen Streckenabschnitt auf einer Fahrbahn oder eine längere Route zwischen zwei geographischen Positionen umfassen.

Als "Trajektorienähnlichkeit" wird erfindungsgemäß ein Maß dafür bezeichnet, das quantitativ den Grad der Ähnlichkeit zweier oder mehrerer Trajektorien angibt. Insbesondere kann dabei ein höherer Wert der Trajektorienähnlichkeit für eine größere Ähnlichkeit stehen. Es kann also bestimmt werden, ob miteinander verglichene Trajektorien im Wesentlichen miteinander übereinstimmen oder wie stark sie voneinander abweichen. Beispielsweise kann dabei der Abstand der Trajektorien voneinander, insbesondere ihr minimaler und maximaler Abstand, berücksichtigt werden. Es können ferner Richtungsänderungen entlang der zu vergleichenden Trajektorien berücksichtigt werden, etwa durch Betrachten der ersten Ableitung der Trajektorien, sodass beispielsweise parallel verlaufende Trajektorien ähnlicher bewertet werden können als solche mit sehr unterschiedlichem Verlauf.

Im ersten Schritt wird eine Strecke oder ein Streckenabschnitt, beispielsweise eine öffentliche Straße, ein Weg innerhalb eines abgeschlossenen Geländes oder in einem Gebäude, von einem Scout-Fahrzeug befahren. Dabei wird zunächst eine Scout-Trajektorie erzeugt und das Scout-Fahrzeug wird entlang dieser Scout-Trajektorie geführt. Im Falle eines automatischen Erzeugung kann die Scout-Trajektorie etwa von einem Fahrplaner oder einem Navigationssystem des Scout-Fahrzeugs sowie Assistenzsystemen erzeugt werden. Die Scout-Trajektorie entspricht dann einem errechneten Bewegungspfad des Fahrzeugs. Ferner kann die Scout-Trajektorie auf andere Weise erzeugt werden, etwa manuell, durch Fernsteuerung oder durch anderweitige Vorgabe, etwa durch Erfassen von einer externen Datenbank. Das Scout-Fahrzeug wird also entlang der Scout-Trajektorie geführt, insbesondere wird eine automatische Führung des Fahrzeugs durchgeführt.

Insbesondere wird die Scout-Trajektorie so erzeugt, dass Daten über sie vorliegen, die einen Abgleich mit anderen Trajektorien ermöglichen. Dazu werden Referenz-Trajektoriendaten erzeugt, die etwa alle relevanten Informationen über die Scout-Trajektorie umfassen. Die Refrenz-Trajektoriendaten können auch aus der Scout-Trajektorie bestehen. Diese Referenz-Trajektoriendaten werden an das Folgefahrzeug übertragen und können nun von diesem verarbeitet werden. Die Übertragung kann auf verschiedene, an sich bekannte Weisen erfolgen, insbesondere mittels einer Funkverbindung, etwa direkt oder indirekt über ein Netzwerk zur Datenübertragung.

Ferner umfasst das Scout-Fahrzeug Scout-Sensoren, durch die Scout-Umgebungsdaten erfasst werden. Diese Umgebungsdaten charakterisieren die befahrene Strecke, sie betreffen also etwa Merkmale des befahrenen Untergrunds, zum Beispiel den Streckenverlauf, Fahrbahnmarkierungen oder den Zustand des Bodenbelags, Hinweisschilder, Bauwerke, Pflanzen und landschaftliche Merkmale in der Umgebung der Strecke. Die verwendeten Sensoren sind an sich bekannt und können beliebig kombiniert werden.

Um auch dem Folgefahrzeug zu ermöglichen, die Scout-Umgebungsdaten zu verarbeiten, werden Referenz-Umgebungsdaten erzeugt, die etwa alle relevanten Informationen der Scout-Umgebungsdaten umfassen. Diese Referenz-Umgebungsdaten werden, insbesondere zusammen mit den oben genannten Referenz-Trajektoriendaten, an das Folgefahrzeug übertragen und können nun von diesem verarbeitet werden. Die Übertragung kann wiederum auf verschiedene, an sich bekannte Weisen erfolgen, insbesondere mittels einer Funkverbindung, etwa direkt oder indirekt über ein Netzwerk zur Datenübertragung.

Das Scout-Fahrzeug befährt also die Scout-Trajektorie, es werden Referenz-Trajektoriendaten und Referenz-Umgebungsdaten erzeugt und es kann nun überprüft werden, ob das Folgefahrzeug die Trajektorie automatisch befahren kann:
Zunächst wird, etwa durch einen Fahrplaner des Folgefahrzeugs, eine Soll-Trajektorie erzeugt, entlang derer das Folgefahrzeug automatisch gesteuert werden soll. Insbesondere können das Scout-Fahrzeug und das Folgefahrzeug ähnliche oder funktionsgleiche Fahrplaner umfassen, die unter den gleichen Bedingungen funktionsbedingt zumindest annähernd identische Trajektorien berechnen. Es können jedoch auch verschiedene Fahrplaner verwendet werden oder ähnliche Fahrplaner können aufgrund veränderter Umstände zu verschiedenen Ergebnissen gelangen.

Das Folgefahrzeug empfängt die Referenz-Trajektoriendaten und führt einen Trajektorienvergleich durch, wobei insbesondere die Soll-Trajektorie mit der Scout-Trajektorie verglichen wird. Es werden zumindest einander entsprechende Abschnitte der Trajektorien betrachtet. Damit wird quantifiziert, ob und wie stark sich die von den Systemen des Scout-Fahrzeugs und des Folgefahrzeugs erzeugten Trajektorien unterscheiden.

Ferner umfasst das Folgefahrzeug Folgefahrzeug-Sensoren, durch die Folgefahrzeug-Umgebungsdaten erfasst werden. Diese Sensoren können dabei im Wesentlichen die gleichen Merkmale der Strecke und der Umgebung erfassen wie die Sensoren des Scout-Fahrzeugs, allerdings werden nicht notwendigerweise die gleichen Sensortypen verwendet und die Anzahl der Sensoren kann sich unterscheiden. Wesentlich ist, dass die Folgefahrzeug-Umgebungsdaten und die Scout-Umgebungsdaten zumindest teilweise vergleichbare Ergebnisse liefern, beispielsweise indem sie die Position bestimmter Bauwerke am Rand der Strecke identifizieren oder andere Strukturen detektieren, etwa eine Fahrbahnmarkierung oder Verkehrsschilder.

Die Folgefahrzeug-Umgebungsdaten und die Referenz-Umgebungsdaten werden im Folgefahrzeug miteinander verglichen und es wird eine Umgebungsähnlichkeit bestimmt. Durch eine Prüfung der Umgebungsähnlichkeit kann sichergestellt werden, dass sich das Folgefahrzeug tatsächlich auf der gleichen Trajektorie wie das Scout-Fahrzeug befindet und es kann überprüft werden, ob und in wieweit sich die Merkmale der zu befahrenden Strecke verändert haben, nachdem diese von dem Scout-Fahrzeug befahren wurde. Beispielsweise kann festgestellt werden, ob seitdem der Verlauf der Fahrbahn geändert wurde, etwa bei einer Baustelle, und ob diese Änderungen so gravierend sind, dass die Strecke möglicherweise nicht mehr sicher automatisch befahrbar ist.

Für die Entscheidung, ob eine Trajektorie sicher automatisch vom Folgefahrzeug befahren werden kann, können etwa Schwellenwerte für die Trajektorienähnlichkeiten und für die Umgebungsähnlichkeit bestimmt werden. Diese können fest definiert sein oder variabel bestimmbar sein. Sind die Ähnlichkeiten groß genug, übersteigen sie also die entsprechenden Schwellenwerte, so wird die automatische Steuerung des Folgefahrzeugs für die Soll-Trajektorie aktiviert, das heißt, die automatisierte Fahrt des Folgefahrzeugs entlang der Soll-Trajektorie wird freigegeben.

Das Folgefahrzeug erfasst insbesondere weitere Daten zur automatischen Steuerung. Dazu können weitere Sensoren vorhanden sein oder es können die gleichen Sensoren wie für den Abgleich mit den Scout-Umgebungsdaten verwendet werden. Beispielsweise können Daten über bewegte Objekte in der näheren Umgebung des Folgefahrzeugs erfasst werden, von denen das Folgefahrzeug Abstand halten oder denen es ausweichen muss. Diese Daten sind für den Abgleich mit den Scout-Umgebungsdaten nicht relevant, da sie keine Merkmale der befahrenen Strecke sind, sondern vom einzelnen Fahrzeug abhängen und sich typischerweise kurzfristig ändern.

Bei einer Ausbildung des erfindungsgemäßen Verfahrens wird, wenn keine automatische Steuerung des Folgefahrzeugs aktiviert wird, ein sicherer Fahrmodus des Folgefahrzeugs aktiviert. Damit wird vorteilhafterweise erreicht, dass das Folgefahrzeug auf einer für die automatische Steuerung ungeeigneten Trajektorie sicher geführt wird.

Die Umgebungsdatenähnlichkeit oder die Trajektorienähnlichkeit kann beispielsweise dann den bestimmten Schwellenwert nicht mehr erreichen, wenn sich die Streckenführung geändert hat, nachdem das Scout-Fahrzeug die Scout-Umgebungsdaten erfasst hat. Beispielsweise kann eine Baustelle oder eine Absperrung bei einem Unfall dazu führen, dass auf eine andere Fahrspur ausgewichen werden muss und die alternative Strecke nicht mehr als automatisch fahrbar bewertet wird. Insbesondere kann in dem sicheren Fahrmodus die Geschwindigkeit des Fahrzeugs verringert werden, gegebenenfalls bis zum Halt des Fahrzeugs an einer geeigneten Stelle. Ferner kann ein Fahrer des Folgefahrzeugs benachrichtigt werden und die manuelle Steuerung des Folgefahrzeugs übernehmen, wobei sich der Fahrer im Folgefahrzeug befinden kann oder das Folgefahrzeug ferngesteuert werden kann.

Die Benachrichtigung des Fahrers kann beispielsweise durch die Ausgabe eines akustischen und/oder visuellen Warnsignals erfolgen. Während sich der Fahrer, während die automatische Steuerung aktiviert ist, mit anderen Aufgaben beschäftigen kann, übernimmt er nun die Steuerung manuell. Dabei kann die manuelle Steuerung dennoch durch verschiedene Assistenzsysteme unterstützt werden, beispielsweise durch einen Spurhalteassistenten, einen Abstandstempomat und/oder Spurwechselassistenten. Ferner kann eine bestimmte Dauer für den Übergang von der automatischen zur manuellen Steuerung vorgesehen sein, wobei beispielsweise das Folgefahrzeug an einer geeigneten Stelle zum Halt gebracht wird, wenn der Fahrer die Steuerung nicht innerhalb der bestimmten Übergangsdauer übernimmt.

Bei einer Ausbildung des erfindungsgemäßen Verfahrens wird das Scout-Fahrzeug automatisch gesteuert. Dadurch kann vorteilhafterweise ein hoher Automatisierungsgrad erreicht werden. Insbesondere kann die automatische Fahrt des Scout-Fahrzeugs ebenfalls durch das erfindungsgemäße Verfahren aktiviert werden, wobei die Scout-Trajektorie und die Scout-Umgebungsdaten dann mit Referenzdaten eines weiteren Fahrzeugs verglichen werden, das die Trajektorie vor dem Scout-Fahrzeug befahren hat. Das Verfahren kann also auf eine Reihe von Fahrzeugen angewandt werden, die jeweils füreinander verschiedene Rollen übernehmen.

Alternativ oder zusätzlich dazu kann die Scout-Trajektorie ferner in Abhängigkeit von Eingaben eines Fahrers des Scout-Fahrzeugs erzeugt werden. Als "Eingaben" des Fahrers sind dabei auch direkte manuelle Eingriffe in die Steuerung des Scout-Fahrzeugs zu verstehen, etwa Lenkbewegungen, das Betätigen der Bremse oder anderer Pedale sowie Einstellungen an dem Scout-Fahrzeug.

Bei einer Weiterbildung wird ferner eine Scout-Trajektoriengüte bestimmt und
die automatische Steuerung des Folgefahrzeugs wird ferner anhand der Scout-Trajektoriengüte aktiviert. Dadurch kann vorteilhafterweise berücksichtigt werden, wie zuverlässig die Scout-Trajektorie erzeugt wurde.

Als "Scout-Trajektoriengüte" wird erfindungsgemäß ein Maß dafür verstanden, mit wie großen Unsicherheiten die Bestimmung der Scout-Trajektorie verbunden ist. Beispielsweise kann die Scout-Trajektorie anhand von Sensordaten automatisch erzeugt werden. Dabei weisen die Messwerte der Sensoren bestimmte Varianzen auf, die bei der Bestimmung der Scout-Trajektorie berücksichtigt werden. Insbesondere umfassen die Referenz-Trajektoriendaten Informationen zu der Scout-Trajektoriengüte.

Gemäß einer weiteren Ausbildung wird die Scout-Trajektorie anhand eines Bildverarbeitungssystems erzeugt, wobei die Trajektoriengüte durch das Bildverarbeitungssystem bestimmt wird. Es kann somit vorteilhafterweise die Erkennungssicherheit des Bildverarbeitungssystems berücksichtigt werden.

So können etwa Bilddaten zum Erzeugen der Scout-Trajektorie verwendet werden und es kann eine Bilderkennung durchgeführt werden, etwa um Verkehrsschilder zu erkennen und ihren Inhalt zu extrahieren. Dabei kann, beispielsweise bedingt durch suboptimale Sichtverhältnisse, eine Unsicherheit auftreten, die bei der Bewertung der Scout-Trajektorie zu berücksichtigt ist.

Bei einer Weiterbildung wird die Scout-Trajektoriengüte anhand von Eingaben eines Nutzers bestimmt. Dadurch kann der Nutzer die Freigabe der Trajektorie für die automatische Befahrbarkeit direkt beeinflussen und durch die Überprüfung der Scout-Trajektorie durch den Nutzer wird eine weitere Redundanz eingeführt.

Beispielsweise kann der Nutzer ein Fahrer im Scout-Fahrzeug sein. Dieser Fahrer kann die Fahrt des Scout-Fahrzeugs überwachen und etwa erkennen, dass die Scout-Trajektorie nicht optimal für die automatische Befahrbarkeit erkennbar ist. Beispielsweise kann einer irreführenden Fahrbahnmarkierung gefolgt werden oder andere wesentliche Charakteristika der Verkehrsführung werden womöglich nicht optimal erkannt. Der Nutzer kann seine Bewertung durch eine Eingabe verdeutlichen und dies wird anschließend berücksichtigt, gegebenenfalls wird die Trajektorie als nicht automatisch befahrbar bewertet.

Bei einer weiteren Ausbildung des erfindungsgemäßen Verfahrens werden die Scout-Trajektorie, die Scout-Umgebungsdaten, die Soll-Trajektorie und/oder die Folgefahrzeug-Umgebungsdaten an einen externen Server übertragen. Die Übertragung der Daten kann so in vorteilhafter Weise durch den externen Server verwaltet werden und es wird ein größerer zeitlicher und räumlicher Versatz beim Befahren der Trajektorie durch das Scout-Fahrzeug und das Folgefahrzeug ermöglicht.

Insbesondere können Folgefahrzeuge beim automatischen Befahren einer Trajektorie die von ihnen erzeugte und schließlich befahrene Soll-Trajektorie und die von ihnen erfassten Umgebungsdaten an den Server übertragen.

Der externe Server kann die an ihn übertragenen Daten speichern und verwalten. Ferner können Daten auch über eine bidirektionale Verbindung an die Fahrzeuge übertragen werden, sodass keine direkte Verbindung zwischen den Fahrzeugen notwendig ist.

Bei einer Weiterbildung werden die Referenz-Trajektoriendaten und/oder die Referenz-Umgebungsdaten durch den externen Server erzeugt und von dem externen Server an das Folgefahrzeug übertragen. Es kann somit vorteilhafterweise eine zentrale Verwaltung der Referenzdaten bereitgestellt werden.

Verschiedene an den Server übertragene Daten zu automatisch befahrbaren Trajektorien und die entsprechenden Umgebungsdaten können so auf vielfältige Weise miteinander verknüpft und bei der Erzeugung der Referenzdaten berücksichtigt werden. Insbesondere können Daten aus verschiedenen Quellen, etwa bei mehrfachem Befahren der Trajektorie durch Scout-Fahrzeuge, verwendet werden, beispielsweise um Trajektoriendaten und/oder Umgebungsdaten zu vervollständigen oder zu aktualisieren. Die zentrale Verwaltung der Referenz-Trajektoriendaten und -Umgebungsdaten erlaubt es ferner, die Verteilung dieser Daten an Folgefahrzeuge flexibel und vorausschauend zu gestalten. Beispielsweise können die relevanten Daten bereits bei der Planung einer Fahrt übertragen werden, insbesondere ohne dass dazu eine dauernde Verbindung des Folgefahrzeugs mit externen Datenquellen wie dem Scout-Fahrzeug und/oder dem externen Server bestehen muss. Ferner können Referenz-Trajektoriendaten und -Umgebungsdaten durch den externen Server gebündelt und beliebig kombiniert werden.

Auf diese Weise kann ferner die Erzeugung der Referenz-Trajektoriendaten und der Referenz-Umgebungsdaten zentral optimiert werden, ohne dass dazu etwa Aktualisierungen einer Software des Scout-Fahrzeugs nötig ist.

Bei einer weiteren Ausbildung werden die Referenz-Trajektoriendaten und/oder die Referenz-Umgebungsdaten ferner anhand von Zusatzdaten erzeugt. Dies erlaubt vorteilhafterweise die Einbeziehung weiterer Daten.

Beispielsweise können Daten von externen Datenquellen verwendet werden, etwa aus Datenbanken oder dem Internet. Ferner können manuelle Ergänzungen, Veränderungen und/oder Korrekturen vorgenommen werden, beispielsweise bei einem manuellen Editieren der Daten. Dies kann insbesondere bei der Verwaltung der Daten und Erzeugung der Referenz-Trajektoriendaten und -Umgebungsdaten auf einem externen Server erfolgen.

Bei einer Weiterbildung werden die Referenz-Trajektoriendaten und/oder die Referenz-Umgebungsdaten ferner anhand der Soll-Trajektorie und/oder der Folgefahrzeug-Umgebungsdaten erzeugt. Dies erlaubt vorteilhafterweise eine dauernde Aktualisierung der Referenz-Trajektoriendaten und -Umgebungsdaten.

Insbesondere können Daten von Folgefahrzeugen, die einen Streckenabschnitt oder eine Trajektorie automatisiert befahren, verwendet werden, um den bestehenden Datensatz zu überprüfen, zu vervollständigen, zu erneuern und/oder zu aktualisieren. Beispielsweise können sich einige Umgebungsdaten mit der Zeit verändern, etwa die Vegetation am Straßenrand im Laufe des Jahres oder Plakatwände, ferner können etwa Alterungserscheinungen oder Auffrischungen, etwa des Fahrbahnbelags oder Verkehrszeichen auf der Fahrbahn, auftreten. Es können insbesondere Filteralgorithmen verwendet werden, um zu erkennen, welche Veränderungen eine gewöhnliche Aktualisierung der bestehenden Datensätze erforderlich machen oder welche Veränderungen so gravierend sind, dass keine automatische Befahrbarkeit der Trajektorie möglich ist.

Bei einer weiteren Ausbildung erfasst das Folgefahrzeug die Scout-Trajektorie durch die Folgefahrzeug-Sensoren. In diesem Fall kann vorteilhafterweise auf die Übertragung der Scout-Trajektorie auf das Folgefahrzeug verzichtet werden.

Dabei wird vorausgesetzt, dass eine Sichtverbindung zwischen dem Folgefahrzeug und dem Scout-Fahrzeug besteht. Das Folgefahrzeug umfasst in diesem Fall Sensoren, die eine Verfolgung der Trajektorie des vorausfahrenden Scout-Fahrzeugs ermöglichen, etwa Kameras und/oder Radar- oder Lidarsensoren.

Bei dem erfindungsgemäßen System zur automatischen Steuerung zumindest eines Folgefahrzeugs mit einem Scout-Fahrzeug umfasst das Scout-Fahrzeug einen Scout-Fahrplaner, durch den eine Scout-Trajektorie für das Scout-Fahrzeug erzeugbar ist. Es umfasst ferner eine Scout-Steuereinrichtung, durch die das Scout-Fahrzeug entlang der Scout-Trajektorie führbar ist, und Scout-Sensoren, durch die Scout-Umgebungsdaten erfassbar sind. Dabei umfasst das Folgefahrzeug einen Folgefahrzeug-Fahrplaner, durch den eine Soll-Trajektorie für das Folgefahrzeug erzeugbar ist. Es umfasst ferner Folgefahrzeug-Sensoren, durch die Folgefahrzeug-Umgebungsdaten erfassbar sind, und eine Folgefahrzeug-Steuereinrichtung, durch die das Folgefahrzeug entlang der Soll-Trajektorie führbar ist. Dabei sind durch eine Recheneinheit anhand der Scout-Trajektorie Referenz-Trajektoriendaten erzeugbar und anhand der Scout-Umgebungsdaten Referenz-Umgebungsdaten erzeugbar. Die Referenz-Trajektoriendaten und die Referenz-Umgebungsdaten sind an das Folgefahrzeug übertragbar und mittels einer Vergleichseinheit ist durch einen Trajektorienvergleich anhand der erzeugten Soll-Trajektorie und der übertragenen Referenz-Trajektoriendaten eine Trajektorienähnlichkeit bestimmbar, wobei quantifizierbar ist, ob und wie stark sich die Soll-Trajektorie und die Scout-Trajektorie unterscheiden. Mittels der Vergleichseinheit ist ferner durch einen Umgebungsdatenvergleich anhand der erfassten Folgefahrzeug-Umgebungsdaten und der übertragenen Referenz-Umgebungsdaten eine Umgebungsähnlichkeit bestimmbar. Schließlich ist in Abhängigkeit von der Trajektorienähnlichkeit und der Umgebungsähnlichkeit eine automatische Steuerung des Folgefahrzeugs entlang der Soll-Trajektorie aktivierbar.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des erfindungsgemäßen Systems ist die Scout-Steuereinrichtung so gebildet, dass das Scout-Fahrzeug durch sie automatisch führbar ist. Dadurch wird vorteilhafterweise ein hoher Automatisierungsgrad erreicht. Die automatische Führung des Scout-Fahrzeugs kann insbesondere ebenfalls durch die Überprüfung von vorher erfassten Umgebungs- und Trajektoriendaten erfolgen, etwa bei einer Ausführung des erfindungsgemäßen Verfahrens in einer Reihe von Fahrzeugen, die füreinander die Funktion des Scout- und Folgefahrzeugs übernehmen können.

Ferner kann zusätzlich oder alternativ zu der automatischen Führung des Scout-Fahrzeugs eine manuelle Führung durch einen Fahrer vorgesehen sein. Dieser kann ergänzend zu einer automatischen Führung eingreifen, diese überprüfen oder vollständig die Führung des Fahrzeugs übernehmen.

Bei einer weiteren Ausbildung ist durch den Scout-Fahrplaner ferner eine Scout-Trajektoriengüte bestimmbar und die automatische Steuerung des Folgefahrzeugs ist ferner anhand der Scout-Trajektoriengüte aktivierbar. Dadurch kann vorteilhafterweise eine Redundanzstufe implementiert werden, anhand derer die automatische Befahrbarkeit der Scout-Trajektorie bewertet werden kann. Die Bestimmung der Scout-Trajektoriengüte kann dabei auf verschiedene Weise erfolgen, etwa anhand einer Bewertung von Bilddaten und deren Verarbeitung zur Erzeugung der Scout-Trajektorie. Ferner kann eine manuelle Bewertung, etwa durch einen Fahrer, berücksichtigt werden.

Bei einer Weiterbildung umfasst das System ferner einen externen Server und die Scout-Trajektorie, die Scout-Umgebungsdaten, die Soll-Trajektorie und/oder die Folgefahrzeug-Umgebungsdaten sind an den externen Server übertragbar. Dies ermöglicht in vorteilhafter Weise eine zentrale Verwaltung der Daten.

Insbesondere können Daten aus verschiedenen Quellen kombiniert, vervollständigt und/oder aktualisiert werden. Ferner kann die Erzeugung der Referenz-Trajektoriendaten und/oder Referenz-Umgebungsdaten durch den externen Server erfolgen. Die relevanten Daten können ferner verschiedenen Fahrzeugen zur Verfügung gestellt werden, ohne dass dazu eine direkte Datenverbindung bestehen muss, ferner kann die Übertragung zeitlich versetzt erfolgen.
- Figur 1: zeigt ein Ausführungsbeispiel des erfindungsgemäßen Systems,
- Figur 2: zeigt ein Ausführungsbeispiel des erfindungsgemäßen Verfahrens und
- Figuren 3A und 3B: zeigen ein weiteres Ausführungsbeispiel des erfindungsgemäßen Verfahrens.

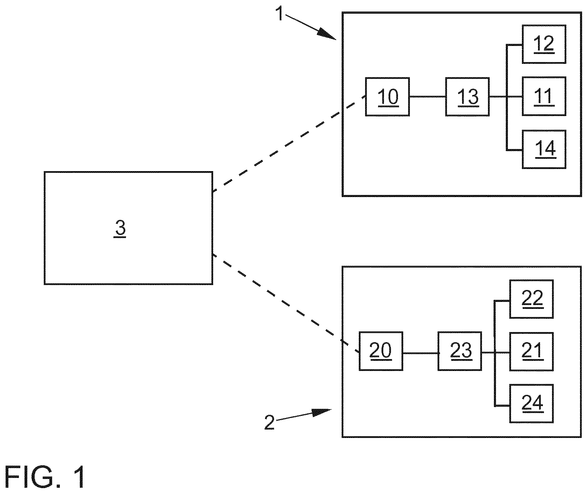

Mit Bezug zu Figur 1 wird ein Ausführungsbeispiel des erfindungsgemäßen Systems erläutert.

Das System umfasst ein Scout-Fahrzeug 1, ein Folgefahrzeug 2 und einen externen Server 3. Das Scout-Fahrzeug 1 und das Folgefahrzeug 2 sind wenigstens zeitweise datentechnisch mit dem externen Server 3 verbunden. Dazu umfasst das System Datenschnittstellen 10 und 20 des Scout-Fahrzeugs 1 und des Folgefahrzeugs 2. Auf diese Weise können Daten von den Fahrzeugen an den externen Server 3 übertragen, dort gespeichert und vom externen Server 3 an die Fahrzeuge übertragen werden. Insbesondere ermöglicht dies einen indirekten Austausch von Daten zwischen dem Scout-Fahrzeug 1 und dem Folgefahrzeug 2, ohne dass eine direkte Verbindung zwischen beiden bestehen muss.

Die datentechnische Verbindung kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Die Verbindung kann auch indirekt über eine weitere Einheit hergestellt werden, die selbst eine Verbindung zu dem externen Server herstellen kann. Beispielsweise kann eine datentechnische Verbindung zwischen der mobilen Einheit und einem mit dem Internet verbundenen Mobiltelefon bestehen, etwa durch ein Datenkabel oder eine Funkverbindung, etwa per Bluetooth. Insbesondere kann die Verbindung zu dem externen Server 3 über das Internet hergestellt werden.

In einem weiteren Ausführungsbeispiel sind das Scout-Fahrzeug 1 und das Folgefahrzeug 2 alternativ oder zusätzlich zu dem externen Server 3 direkt miteinander verbunden. In diesem Fall umfasst das System nicht notwendigerweise den externen Server 3. Der Datenaustausch kann in diesem Fall direkt zwischen den Fahrzeugen erfolgen.

Das Scout-Fahrzeug 1 umfasst eine Steuereinheit 13, mit der die Datenschnittstelle 10, ein Fahrplaner 12 und eine Erfassungseinheit 11 gekoppelt sind. Durch den Fahrplaner 12 des Scout-Fahrzeugs 1 wird eine Scout-Trajektorie erzeugt. Ferner werden durch die Erfassungseinheit 11 Scout-Umgebungsdaten erfasst. Das Scout-Fahrzeug 1 umfasst zudem einen Autopiloten 14, durch den das Scout-Fahrzeug 1 entlang der vom Fahrplaner 12 erzeugten Route geführt werden kann.

Die automatische Steuerung durch den Autopiloten 14 erfolgt nach an sich bekannten Verfahren, insbesondere durch automatische Eingriffe der Längs- und Querbeschleunigung des Scout-Fahrzeugs 1. Auf diese Weise können Richtung und Betrag der Fahrzeuggeschwindigkeit gesteuert werden. Der Autopilot geht dabei von einer durch den Fahrplaner 12 des Scout-Fahrzeugs 1 bestimmten Scout-Trajektorie aus, allerdings kann sich die tatsächlich vom Scout-Fahrzeug 1 gefahrene Trajektorie von der erzeugten Scout-Trajektorie unterscheiden, etwa wenn Hindernissen ausgewichen werden muss oder der Verkehrsfluss ein Abweichen von der zuvor berechneten Trajektorie erfordert. Die automatische Steuerung durch den Autopiloten 14 setzt voraus, dass die automatische Steuerung durch die Steuereinheit 13 aktiviert wurde.

Ferner erfassen Sensoren der Erfassungseinheit 11 Bilddaten in der Umgebung des Scout-Fahrzeugs 1, wobei zusätzlich zu Sensoren für den sichtbaren Teil des Lichtspektrums auch Infrarotkameras verwendet werden. Ferner werden Radar- und Lidar-Sensoren verwendet. In weiteren Ausführungsformen können beliebige weitere, geeignete Sensoren des Scout-Fahrzeugs 1 verwendet werden. Die erfassten Umgebungsdaten umfassen charakteristische Merkmale in der Umgebung der befahrenen Trajektorie, beispielsweise Merkmale des befahrenen Untergrunds, zum Beispiel den Streckenverlauf, Fahrbahnmarkierungen oder den Zustand des Bodenbelags, Hinweisschilder, Bauwerke, Pflanzen und landschaftliche Merkmale in der Umgebung der Strecke.

Bei der Erzeugung der Scout-Trajektorie durch den Fahrplaner 12 wird ferner eine Trajektoriengüte bestimmt. Dabei wird quantifiziert, mit welcher Sicherheit die automatisch erzeugte Scout-Trajektorie bestimmt wurde. Beispielsweise kann anhand von durch die Erfassungseinheit 11 bereitgestellten Bilddaten erkannt werden, wenn schlechte Sichtverhältnisse herrschen oder bestimmte Situationen schwer automatisch bewertet werden können. Beispielsweise kann dies durch eine unübersichtliche Verkehrssituation oder schlecht lesbare Verkehrszeichen bedingt sein. In diesem Fall kommt durch die Trajektoriengüte zum Ausdruck, das die erzeugte Scout-Traketorie vorsichtig zu bewerten und die automatische Fahrt gegebenenfalls durch weitere Sicherheitssysteme und redundante Einrichtungen des Fahrzeugs unterstützt werden soll.

Ergänzend kann vorgesehen sein, dass die Bewegung des Scout-Fahrzeugs 1 durch die Erfassungseinheit 11 erfasst wird. Die tatsächliche Ist-Trajektorie des Scout-Fahrzeugs 1 kann dabei nach an sich bekannten Verfahren bestimmt werden, insbesondere anhand der Daten eines satellitengestützten Ortungssystems.

Analog zum Scout-Fahrzeug 1 umfasst auch das Folgefahrzeug 2 eine Steuereinheit 23, die mit der Datenschnittstelle 20, einem Fahrplaner 22 und einer Erfassungseinheit 21 gekoppelt ist. Es umfasst ferner einen Autopilot 24, der das Folgefahrzeug 2 automatisch steuern kann. Durch die Erfassungseinheit 21 werden Folgefahrzeug-Umgebungsdaten erfasst. Es kann ferner vorgesehen sein, dass Sensoren der Erfassungseinheit 21 die tatsächlich gefahrene Trajektorie des Folgefahrzeugs 2 erfassen.

Der externe Server 3 umfasst in dem dargestellten Ausführungsbeispiel eine Recheneinheit, durch die Referenz-Datensätze, insbesondere Referenz-Trajektoriendaten und Referenz-Umgebungsdaten, erzeugbar sind, basierend auf von dem Scout-Fahrzeug 1 oder dem Folgefahrzeug 2 erfassten Daten. Ferner umfassen die Steuereinheiten 13, 23 des Scout-Fahrzeugs 1 und des Folgefahrzeugs 2 Vergleichseinheiten, durch die Vergleiche von Daten über Trajektorien und Umgebungsdaten durchgeführt werden können.

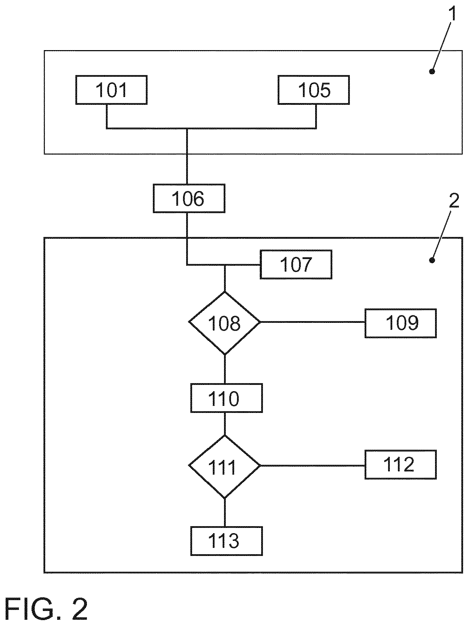

Mit Bezug zu den Figuren 1 und 2 wird ein Ausführungsbeispiel des erfindungsgemäßen Verfahrens erläutert.

Das erfindungsgemäße Verfahren wird in diesem Beispiel durch das in Figur 1 dargestellte System implementiert. Die Darstellung der Schritte, durch die das erfindungsgemäße Verfahren ausgeführt wird, spiegelt nicht notwendigerweise die Reihenfolge der Durchführung einzelner Schritte wider. Diese können ferner mit größerem oder kleinerem zeitlichen Abstand oder gleichzeitig ausgeführt werden. Ferner ist nur beispielhaft dargestellt, welche Schritte durch welche Komponente des Systems ausgeführt wird. Dies kann sich in anderen Ausführungsbeispielen unterscheiden, insbesondere kann der externe Server 3 Schritte ausführen, die hier als zu den Fahrzeugen gehörig dargestellt sind.

Im Scout-Fahrzeug 1 wird durch den Fahrplaner 12 in einem Schritt 101 eine Scout-Trajektorie bestimmt. Das Scout-Fahrzeug 1 wird automatisch entlang der Scout-Trajektorie geführt. Dabei werden insbesondere die Lenkung und die Geschwindigkeit des Scout-Fahrzeugs 1 automatisch durch den Autopiloten 14 gesteuert.

In dem Ausführungsbeispiel wird dabei ferner eine Scout-Trajektoriengüte bestimmt, die eine Sicherheitsbewertung der automatisch erzeugten Trajektorie angibt. Dies kann durch Eingaben eines Fahrers des Scout-Fahrzeugs 1 oder durch eine externe Überwachung der Fahrt des Scout-Fahrzeugs 1 unterstützt werden. Unterschreitet die Scout-Trajektoriengüte einen bestimmten Wert, wird die Scout-Trajektorie als nicht automatisch befahrbar bewertet und es kann dabei die automatische Fahrt durch die Steuereinheit 13 deaktiviert und ein sicherer Fahrmodus des Scout-Fahrzeugs 1 aktiviert werden, wobei etwa die Steuerung manuell durch einen Fahrer oder eine Fernsteuerung erfolgt. Die nunmehr durch andere Einrichtungen, etwa durch eine manuelle Steuerung des Scout-Fahrzeugs 1, erzeugte tatsächliche Trajektorie des Scout-Fahrzeugs 1 kann in diesem Fall die automatisch erzeugte Scout-Trajektorie ersetzen.

In einem nächsten Schritt 105 werden durch Sensoren der Erfassungseinheit 11 Scout-Umgebungsdaten erfasst. Die Erfassung der Scout-Umgebungsdaten kann fortlaufend erfolgen, unabhängig von der in Schritt 101 bestimmten Scout-Trajektorie.

In einem Schritt 106 werden die Scout-Trajektorie und Scout-Umgebungsdaten an das Folgefahrzeug 2 übertragen, wobei der eigentlichen Übertragung gegebenenfalls ein Verarbeitungsschritt vorausgeht. Dabei werden insbesondere nur relevante Daten übertragen, etwa solche Scout-Umgebungsdaten, die als besonders kennzeichnend für den Verlauf der Scout-Trajektorie bestimmt wurden, oder diejenigen Teile der Scout-Trajektorie, die als für das Folgefahrzeug 2 relevant erkannt wurden. Die übertragenen Daten werden als "Referenz-Trajektoriendaten" und "Referenz-Umgebungsdaten" bezeichnet. Diese Referenzdaten werden in einem geeigneten Format übertragen und können insbesondere von dem Folgefahrzeug ausgewertet und mit anderen Daten verglichen werden. In einem Beispiel können die Referenz-Trajektoriendaten der Scout-Trajektorie entsprechen und die Referenz-Umgebungsdaten können den Scout-Umgebungsdaten entsprechen. Ferner können die Referenzdaten aber auch anhand weiterer Daten erzeugt werden und beispielsweise Trajektorien- und Umgebungsdaten umfassen , die von anderen Fahrzeugen oder zu anderen Zeitpunkten erfasst wurde. Dabei kann insbesondere eine fortlaufende Aktualisierung der Referenzdaten vorgenommen werden, sodass sichergestellt wird, dass stets möglichst aktuelle und relevante Referenzdaten übertragen werden.

Dabei kann insbesondere eine bidirektionale Verbindung zwischen dem Scout-Fahrzeug 1 und dem Folgefahrzeug 2 zum Austausch von Informationen über die zu übertragenden Daten verwendet werden. Das Folgefahrzeug 2 kann insbesondere die Übertragung von Referenzdaten anfordern und bei seiner Anfrage die Art der angeforderten Daten spezifizieren.

Die Übertragung erfolgt hier wie in Figur 1 gezeigt indirekt über den externen Server 3. Der externer Server 3 übernimmt in diesem Beispiel die Aufgabe eines Speichers und einer Verwaltung für die Referenzdaten. In einem weiteren Ausführungsbeispiel besteht eine direkte Verbindung zwischen dem Scout-Fahrzeug 1 und dem Folgefahrzeug 2, wobei die Trajektorien und die Umgebungsdaten verschiedener Fahrzeuge berücksichtigt werden.

In einem weiteren Ausführungsbeispiel wird die Ist-Trajektorie nicht an das Folgefahrzeug 2 übertragen, sondern Sensoren der Erfassungseinheit 21 des Folgefahrzeugs 2 erfassen die Ist-Trajektorie des Scout-Fahrzeugs 1, sofern sich dieses in Sichtweite vor ihm befindet.

In einem Schritt 107 wird von dem Fahrplaner 21 des Folgefahrzeugs 2 eine Soll-Trajektorie für das Folgefahrzeug 2 erzeugt. In einem weiteren Schritt 108 werden die Soll-Trajektorie und die Referenz-Trajektoriendaten verglichen und es wird eine Trajektorienähnlichkeit bestimmt. Insbesondere wird dabei die Soll-Trajektorie mit der Scout-Trajektorie verglichen. Wird dabei ein bestimmter Schwellenwert unterschritten, unterscheidet sich also die Soll-Trajektorie wesentlich von den Referenz-Trajektoriendaten, so wird in einem Schritt 109 die automatisch geplante Soll-Trajektorie als nicht sicher automatisch befahrbar bewertet und das Verfahren wird abgebrochen, da sich das Scout-Fahrzeug 1 und das Folgefahrzeug 2 auf unterschiedlichen Trajektorien befinden. Die automatische Steuerung des Folgefahrzeugs 2 wird in diesem Fall nicht aktiviert, sondern ein sicherer Fahrmodus wird aktiviert. Dies umfasst beispielsweise eine manuelle Steuerung durch einen Fahrer oder/oder das Einleiten einer Bremsung.

Wird der Schwellenwert dagegen erreicht oder überschritten, so wird die Soll-Trajektorie zunächst als automatisch befahrbar bewertet, da etwa der Fahrplaner 22 des Folgefahrzeugs 2 die gleiche Trajektorie gewählt hat, wie sie zuvor durch das Scout-Fahrzeug befahren wurde. Daraus wird die Information abgeleitet, dass sich das Folgefahrzeug 2 im Wesentlichen auf der gleichen Trajektorie befindet wie zuvor das Scout-Fahrzeug 1. Es werden nun in einem Schritt 110 Folgefahrzeug-Umgebungsdaten erfasst. Dies erfolgt analog zur Erfassung der Scout-Umgebungsdaten durch das Scout-Fahrzeug 1 in Schritt 105.

In einem Schritt 111 werden die Referenz-Umgebungsdaten, die in Schritt 106 an das Folgefahrzeug 2 übertragen worden sind, mit den erfassten Folgefahrzeug-Umgebungsdaten verglichen. Für die Umgebungsdaten-Ähnlichkeit ist ein weiterer Schwellenwert bestimmt, bei dessen Unterschreiten in einem Schritt 112 die Soll-Trajektorie als nicht sicher automatisch befahrbar bewertet wird. Dies bedeutet insbesondere, dass sich für die Soll-Trajektorie charakteristische Merkmale von Merkmalen der Scout-Trajektorie unterscheiden, dass sich also etwa seit dem Befahren der Strecke durch das Scout-Fahrzeug 1 Änderungen ergeben haben. Es wird daher davon ausgegangen, dass sich auch Merkmale der Trajektorie, die für die Sicherheit einer automatischen Fahrt relevant sind, verändert haben und die Bewertung der automatischen Befahrbarkeit der Trajektorie durch das Scout-Fahrzeug 1 nicht (mehr) zutreffen ist.

Insbesondere wird in dem Schritt 112 ein sicherer Fahrmodus des Folgefahrzeugs 2 aktiviert, indem alternativ oder zusätzlich zu dem Autopiloten 24 ein Fahrer die Führung des Folgefahrzeugs 2 überwacht oder aktiv eingreift. Im dargestellten Fall wird dies durch einen Fahrer im Folgefahrzeug 2 ausgeführt, in anderen Ausführungsbeispielen kann sich der Fahrer beispielsweise im Scout-Fahrzeug 1 befinden oder von einer Einsatzzentrale aus über den externen Server 3 Steuersignale an das Folgefahrzeug 2 übertragen. Erfolgt kein Eingriff des Fahrers, so kann das Folgefahrzeug 2 automatisch zum Stehen gebracht werden.

Erreicht oder überschreitet die Umgebungsdaten-Ähnlichkeit jedoch einen bestimmten Schwellenwert, so wird in einem Schritt 113 die automatische Steuerung des Folgefahrzeugs 2 entlang der Soll-Trajektorie aktiviert. In diesem Fall übernimmt der Autopilot 24 des Folgefahrzeugs 2 die Steuerung des Folgefahrzeugs 2 in Längs- und Querrichtung. Insbesondere erfolgt dies anhand von Daten, die durch die Erfassungseinheit 21 erfasst werden, etwa Informationen über Positionen und die Bewegung andere Verkehrsteilnehmer, den Fahrbahnverlauf, Hindernisse auf der Fahrbahn und verkehrsrechtliche Einschränkungen wie Geschwindigkeitsbeschränkungen oder Überholverbote.

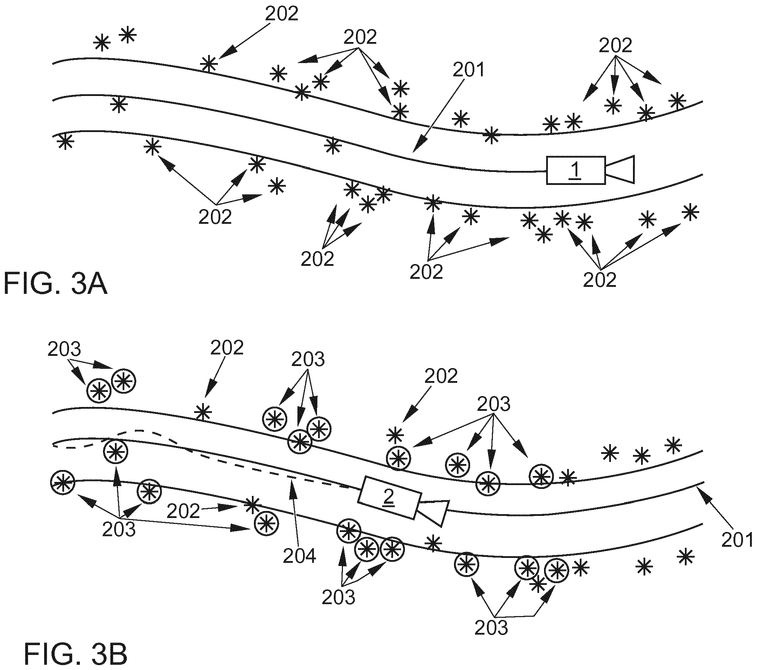

Anhand der Figuren 3A und 3B wird ein weiteres Ausführungsbeispiel des erfindungsgemäßen Verfahrens erläutert. Das erfindungsgemäße Verfahren wird in diesem Beispiel durch das in Figur 1 dargestellte System implementiert.

Zunächst befährt das Scout-Fahrzeug 1 mittels Autopilot 14 eine Strecke entlang der für das Scout-Fahrzeug 1 erzeugten Scout-Trajektorie 201. Währenddessen erfassen die Sensoren der Erfassungseinheit 11 des Scout-Fahrzeugs 1 Scout-Umgebungsdaten 202, die Scout-Orientierungspunkte 202 umfassen und in den Figuren 3A und 3B als Sterne dargestellt sind. Im dargestellten Fall sind dies Verkehrszeichen auf der Fahrbahn und am Streckenrand sowie Bauwerke und landschaftliche Besonderheiten, etwa einzelne Bäume, in der Umgebung der Ist-Trajektorie 201.

Zugleich wird in dem dargestellten Beispiel die Scout-Trajektorie 201 durch einen Fahrer des Scout-Fahrzeugs 1 überprüft und freigegeben, wobei insbesondere die Scout-Trajektoriengüte der durch den Fahrplaner 12 des Scout-Fahrzeugs 1 bestimmten Scout-Trajektorie bewertet wird. Das heißt, der Fahrer, der sich im dargestellten Beispiel im Scout-Fahrzeug 1 befindet, bestätigt die Qualität der durch den Fahrplaner 12 erzeugten Scout-Trajektorie 201. Daher wird die automatisch generierte Scout-Trajektorie 201 als automatisch befahrbar bewertet.

Zu einem späteren Zeitpunkt befährt das Folgefahrzeug 2 die gleiche Strecke. Der Fahrplaner 22 des Folgefahrzeugs 2 erzeugt eine Soll-Trajektorie 204. Anhand der Scout-Trajektorie 201 werden Referenz-Trajektoriendaten erzeugt und an das Folgefahrzeug 2 übertragen. Die Referenz-Trajektoriendaten werden mit der Soll-Trajektorie 204 verglichen und es wird eine Trajektorienähnlichkeit bestimmt. Die Trajektorienähnlichkeit quantifiziert insbesondere die Abweichungen zwischen den verglichenen Trajektorien und ihr Wert ist dabei umso höher, je ähnlicher sich die Trajektorien sind. Der Trajektorienvergleich kann auf verschiedene Weise durchgeführt werden, insbesondere können räumliche Abstände der Trajektorien zueinander quantifiziert werden und es kann der Verlauf der Trajektorien anhand deren Ableitung verglichen werden. Abweichungen der Trajektorien werden insbesondere mittels eines Filteralgorithmus danach gewichtet, wie relevant sie für die automatische Befahrbarkeit der Soll-Trajektorie 204 sind. Beispielsweise wird ein verkehrsbedingtes Ausweichen wegen eines einscherenden Fahrzeugs als weniger relevant gewichtet als eine deutliche Abweichung der Fahrtrichtung, etwa aufgrund einer Baustelle. Andere Abweichungen können stärker berücksichtigt werden, etwa rasche Richtungsänderungen oder Fahrbahnverschwenkungen, etwa bei einer Baustelle. Insbesondere können bei der Erzeugung der Trajektorienähnlichkeit auch weitere Daten über die bloßen Trajektorien hinaus berücksichtigt werden, beispielsweise von den Systemen zur Erzeugung der Trajektorien.

Im dargestellten Fall ist die Trajektorienähnlichkeit groß genug, um von im Wesentlichen gleichen Trajektorien auszugehen.

Ferner werden anhand der Scout-Umgebungsdaten Referenz-Umgebungsdaten erzeugt und an das Folgefahrzeug 2 übertragen. Im dargestellten Beispiel umfassen die Referenz-Umgebungsdaten die Scout-Orientierungspunkte 202. Das Folgefahrzeug 2 erfasst zugleich eigene Folgefahrzeug-Umgebungsdaten mit Folgefahrzeug-Orientierungspunkten 203 und vergleicht diese mit den Referenz-Umgebungsdaten. Dabei stimmen einige der Scout-Orientierungspunkte 202 mit den durch das Folgefahrzeug 2 erfassten Folgefahrzeug-Orientierungspunkten 203 überein. Beispielsweise werden Bäume oder Verkehrsschilder an der gleichen Position erfasst.

Bei dem Vergleich wird eine Priorisierung der verschiedenen Merkmale vorgenommen. Beispielsweise hat es weniger gravierende Folgen für die Umgebungsdaten-Ähnlichkeit, wenn ein Teil der Bepflanzung am Rand der Strecke sich geändert hat, als wenn der Verlauf einer Fahrspur geändert wurde. Ferner werden Fahrzeugdaten des Scout-Fahrzeugs 1 berücksichtigt, etwa seine Höhe, die mit der Höhe des Folgefahrzeugs 2 nicht identisch sein muss.

In einem Vergleich wird eine Umgebungsdaten-Ähnlichkeit bestimmt, die im dargestellten Fall einen zuvor bestimmten Schwellenwert übersteigt. Daher wird für das Folgefahrzeug 2 die automatische Steuerung anhand des Autopiloten 24 entlang der Soll-Trajektorie 204 aktiviert.

In einem weiteren Ausführungsbeispiel werden von dem externen Server 3 Trajektoriendaten und Umgebungsdaten, insbesondere auch von verschiedenen Fahrzeugen, gespeichert und die Referenzdaten anhand dieser Daten erzeugt und an das Folgefahrzeug 2 übertragen. Durch diese zentrale Speicherung können die Referenzdaten erweitert und/oder aktualisiert werden, beispielsweise anhand der von dem Folgefahrzeug 2 erfassten und an den externen Server 3 übertragenen Folgefahrzeug-Umgebungsdaten: Wird hierbei etwa erfasst, dass einer der Scout-Orientierungspunkte 202 nicht mehr vorhanden ist, beispielsweise weil ein parkendes Fahrzeug am Streckenrand fortbewegt wurde, so kann der auf dem externen Server 3 gespeicherte Datensatz entsprechend angepasst werden. Ein Filteralgorithmus bestimmt dabei, ob die Änderungen geringfügig sind und daher eine Anpassung erfolgen kann oder ob sie die automatische Befahrbarkeit der Scout-Trajektorie 201 einschränken, was eine neue Erfassung von Scout-Umgebungsdaten 202 entlang der Scout-Trajektorie 201 durch ein manuell geführtes Scout-Fahrzeug 1 nötig macht.

In einem weiteren Ausführungsbeispiel wird durch das Folgefahrzeug 2 einer der Folgefahrzeug-Orientierungspunkte 203 nicht mit ausreichender Qualität erfasst, beispielsweise kann ein Verkehrsschild bei schlechten Sichtverhältnissen nicht mit ausreichender Sicherheit automatisch gelesen werden. Es werden nun Folgefahrzeug-Umgebungsdaten, in diesem Beispiel Bilddaten des Verkehrsschildes, an das Scout-Fahrzeug 1 übertragen, dessen Fahrer als Entscheidungsstelle fungiert. Er kann nun entscheiden, ob die automatische Fahrt sicher fortgesetzt werden kann und kann etwa Steuerungssignale an das Folgefahrzeug 2 übertragen, die den Inhalt des Verkehrsschildes wiedergeben. Die Entscheidungsstelle kann ferner über den externen Server 3 in das System eingebunden sein.

Ferner kann in einem weiteren Ausführungsbeispiel eine Reihe weiterer Daten bei der Erzeugung der Referenz-Umgebungsdaten oder Referenz-Trajektoriendaten berücksichtigt werden. Insbesondere greift der externe Server 3 auf weitere Datenquellen über das Internet zu und erfasst dort beispielsweise Daten zu temporären oder permanenten Veränderungen der Streckenführung oder zusätzliche Informationen über eine Trajektorie, etwa einen Straßenabschnitt, wie beispielsweise eine Sperrung für das automatische Befahren.

### Bezugszeichenliste

- 1: Scout-Fahrzeug
- 2: Folgefahrzeug
- 3: externer Server; Center
- 10: Datenschnittstelle (Scout-Fahrzeug)
- 11: Sensoren (Scout-Fahrzeug)
- 12: Fahrplaner (Scout-Fahrzeug)
- 13: Steuereinheit (Scout-Fahrzeug)
- 14: Autopilot (Scout-Fahrzeug)
- 20: Datenschnittstelle (Folgefahrzeug)
- 21: Sensoren (Folgefahrzeug)
- 22: Fahrplaner (Folgefahrzeug)
- 23: Steuereinheit (Folgefahrzeug)
- 24: Autopilot (Folgefahrzeug)
- 101: Erzeugung von Scout-Trajektorie
- 105: Erfassung von Scout-Umgebungsdaten
- 106: Übertragung von Referenzdaten
- 107: Erzeugung von Soll-Trajektorie
- 108: Vergleich von Scout- und Soll-Trajektorie
- 109: Abbruch
- 110: Erfassung von Folgefahrzeug-Umgebungsdaten
- 111: Vergleich von Scout- und Folgefahrzeug-Umgebungsdaten
- 112: Bewertung der Soll-Trajektorie als nicht automatisiert fahrbar
- 113: Aktivieren der automatischen Steuerung
- 201: Scout-Trajektorie des Scout-Fahrzeugs
- 202: Scout-Orientierungspunkte, Scout-Umgebungsdaten
- 203: Folgefahrzeug-Orientierungspunkte, Folgefahrzeug-Umgebungsdaten
- 204: Soll-Trajektorie des Folgefahrzeugs

## Patentansprüche

1. Verfahren zur automatischen Steuerung zumindest eines Folgefahrzeugs (2), bei dem
für ein Scout-Fahrzeug (1) eine Scout-Trajektorie (201) erzeugt wird und das Scout- Fahrzeug (1) entlang der Scout-Trajektorie (201) geführt wird, wobei
mittels Scout-Sensoren (11) Scout-Umgebungsdaten (202) erfasst werden,
für das Folgefahrzeug (2) eine Soll-Trajektorie (204) erzeugt wird und mittels Folgefahrzeug-Sensoren (21) Folgefahrzeug-Umgebungsdaten (203) erfasst werden,
anhand der Scout-Trajektorie (201) Referenz-Trajektoriendaten erzeugt werden und anhand der Scout-Umgebungsdaten (202) Referenz-Umgebungsdaten erzeugt werden,
die Referenz-Trajektoriendaten und die Referenz-Umgebungsdaten an das Folgefahrzeug (2) übertragen werden,
durch einen Trajektorienvergleich anhand der erzeugten Soll-Trajektorie (204) und der übertragenen Referenz-Trajektoriendaten eine Trajektorienähnlichkeit bestimmt wird, wobei quantifiziert wird, ob und wie stark sich die Soll-Trajektorie (204) und die Scout-Trajektorie (201) unterscheiden,
durch einen Umgebungsdatenvergleich anhand der erfassten Folgefahrzeug-Umgebungsdaten (203) und der übertragenen Referenz-Umgebungsdaten eine Umgebungsähnlichkeit bestimmt wird und
in Abhängigkeit von der Trajektorienähnlichkeit und der Umgebungsähnlichkeit eine automatische Steuerung des Folgefahrzeugs (2) entlang der Soll-Trajektorie (204) aktiviert wird.

2. Verfahren gemäß Anspruch 1,
**dadurch gekennzeichnet, dass,**
wenn keine automatische Steuerung des Folgefahrzeugs aktiviert wird, ein sicherer Fahrmodus des Folgefahrzeugs (2) aktiviert wird.

3. Verfahren gemäß einem der vorhergehenden Ansprüche,
**dadurch gekennzeichnet, dass**
das Scout-Fahrzeug (1) automatisch gesteuert wird.

4. Verfahren gemäß einem der vorhergehenden Ansprüche,
**dadurch gekennzeichnet, dass**
ferner eine Scout-Trajektoriengüte bestimmt wird und
die automatische Steuerung des Folgefahrzeugs (2) ferner anhand der Scout-Trajektoriengüte aktiviert wird.

5. Verfahren gemäß Anspruch 4,
**dadurch gekennzeichnet, dass**
die Scout-Trajektorie (201) anhand eines Bildverarbeitungssystems erzeugt wird, wobei die Trajektoriengüte durch das Bildverarbeitungssystem bestimmt wird.

6. Verfahren gemäß Anspruch 4 oder 5,
**dadurch gekennzeichnet, dass**
die Scout-Trajektoriengüte anhand von Eingaben eines Nutzers bestimmt wird.

7. Verfahren gemäß einem der vorhergehenden Ansprüche,
**dadurch gekennzeichnet, dass**
die Scout-Trajektorie (201), die Scout-Umgebungsdaten (202), die Soll-Trajektorie (204) und/oder die Folgefahrzeug-Umgebungsdaten an einen externen Server (3) übertragen werden.

8. Verfahren gemäß Anspruch 7,
**dadurch gekennzeichnet, dass**
die Referenz-Trajektoriendaten und/oder die Referenz-Umgebungsdaten durch den externen Server (3) erzeugt und
von dem externen Server (3) an das Folgefahrzeug (2) übertragen werden.

9. Verfahren gemäß Anspruch 8,
**dadurch gekennzeichnet, dass**
die Referenz-Trajektoriendaten und/oder die Referenz-Umgebungsdaten ferner anhand von Zusatzdaten erzeugt werden.

10. Verfahren gemäß einem der vorhergehenden Ansprüche,
**dadurch gekennzeichnet, dass**
die Referenz-Trajektoriendaten und/oder die Referenz-Umgebungsdaten ferner anhand der Soll-Trajektorie (204) und/oder der Folgefahrzeug-Umgebungsdaten erzeugt werden.

11. Verfahren gemäß einem der vorhergehenden Ansprüche,
**dadurch gekennzeichnet, dass**
das Folgefahrzeug (2) die Scout-Trajektorie (201) durch die Folgefahrzeug-Sensoren (21) erfasst.

12. System zur automatischen Steuerung zumindest eines Folgefahrzeugs (2) mit einem Scout-Fahrzeug (1),
wobei das Scout-Fahrzeug (1) umfasst:
- einen Scout-Fahrplaner (12), durch den eine Scout-Trajektorie (201) für das Scout-Fahrzeug (1) erzeugbar ist,
- eine Scout-Steuereinrichtung (13), durch die das Scout-Fahrzeug (1) entlang der Scout-Trajektorie (201) führbar ist, und
- Scout-Sensoren (11), durch die Scout-Umgebungsdaten (202) erfassbar sind;
wobei das Folgefahrzeug (2) umfasst:
- einen Folgefahrzeug-Fahrplaner (22), durch den eine Soll-Trajektorie (204) für das Folgefahrzeug (2) erzeugbar ist,
- Folgefahrzeug-Sensoren (21), durch die Folgefahrzeug-Umgebungsdaten (203) erfassbar sind, und
- eine Folgefahrzeug-Steuereinrichtung (23), durch die das Folgefahrzeug (2) entlang der Soll-Trajektorie (204) führbar ist;
wobei
- durch eine Recheneinheit anhand der Scout-Trajektorie (201) Referenz-Trajektoriendaten erzeugbar sind und anhand der Scout-Umgebungsdaten (202) Referenz-Umgebungsdaten erzeugbar sind,
- die Referenz-Trajektoriendaten und die Referenz-Umgebungsdaten an das Folgefahrzeug (2) übertragbar sind,
- mittels einer Vergleichseinheit durch einen Trajektorienvergleich anhand der erzeugten Soll-Trajektorie (204) und der übertragenen Referenz-Trajektoriendaten eine Trajektorienähnlichkeit bestimmbar ist, wobei quantifizierbar ist, ob und wie stark sich die Soll-Trajektorie (204) und die Scout-Trajektorie (201) unterscheiden,
- mittels der Vergleichseinheit durch einen Umgebungsdatenvergleich anhand der erfassten Folgefahrzeug-Umgebungsdaten (203) und der übertragenen Referenz-Umgebungsdaten eine Umgebungsähnlichkeit bestimmbar ist, und
- in Abhängigkeit von der Trajektorienähnlichkeit und der Umgebungsähnlichkeit eine automatische Steuerung des Folgefahrzeugs (2) entlang der Soll-Trajektorie (204) aktivierbar ist.

13. System nach Anspruch 12,
**dadurch gekennzeichnet, dass**
die Scout-Steuereinrichtung (13) so gebildet ist, dass das Scout-Fahrzeug (1) durch sie automatisch führbar ist.

14. System nach einem der Ansprüche 12 und 13,
**dadurch gekennzeichnet, dass**
durch den Scout-Fahrplaner (12) ferner eine Scout-Trajektoriengüte bestimmbar ist und
die automatische Steuerung des Folgefahrzeugs (2) ferner anhand der Scout-Trajektoriengüte aktivierbar ist.

15. System nach einem der Ansprüche 12 bis 14,
**dadurch gekennzeichnet, dass**
das System ferner einen externen Server (3) umfasst und
die Scout-Trajektorie (201), die Scout-Umgebungsdaten (202), die Soll-Trajektorie (204) und/oder die Folgefahrzeug-Umgebungsdaten an den externen Server (3) übertragbar sind.

## Claims

1. Method for automatically controlling at least one following vehicle (2), in which
a scout trajectory (201) is generated for a scout vehicle (1), and the scout vehicle (1) is driven along the scout trajectory (201), wherein
scout environmental data (202) are acquired by means of scout sensors (11),
a target trajectory (204) for the following vehicle (2) is generated, and following vehicle environmental data (203) are acquired by means of following vehicle sensors (21),
reference trajectory data are generated on the basis of the scout trajectory (201), and reference environmental data are generated on the basis of the scout environmental data (202),
the reference trajectory data and the reference environmental data are transmitted to the following vehicle (2),
a trajectory similarity is determined via a trajectory comparison based upon the generated target trajectory (204) and the transmitted reference trajectory data, wherein it is quantified whether and how starkly the target trajectory (204) and the scout trajectory (201) differ,
an environmental similarity is determined by an environmental data comparison based upon the acquired following vehicle environmental data (203) and the transmitted reference environmental data, and
an automatic control of the following vehicle (2) along the target trajectory (204) is activated depending on the trajectory similarity and the environmental similarity.

2. Method according to claim 1,
**characterized in that**
if automatic control of the following vehicle is not activated, a safe driving mode of the following vehicle (2) is activated.

3. Method according to one of the preceding claims,
**characterized in that**
the scout vehicle (1) is automatically controlled.

4. Method according to one of the preceding claims,
**characterized in that**
a scout trajectory quality is also determined, and
the automatic control of the following vehicle (2) is also activated on the basis of the scout trajectory quality.

5. Method according to claim 4,
**characterized in that**
the scout trajectory (201) is generated on the basis of an image processing system, wherein the trajectory quality is determined by the image processing system.

6. Method according to claim 4 or 5,
**characterized in that**
the scout trajectory quality is determined on the basis of inputs of a user.

7. Method according to one of the preceding claims,
**characterized in that**
the scout trajectory (201), the scout environmental data (202), the target trajectory (204), and/or the following vehicle environmental data are transmitted to an external server (3).

8. Method according to claim 7,
**characterized in that**
the reference trajectory data and/or the reference environmental data are generated by the external server (3), and
are transmitted from the external server (3) to the following vehicle (2).

9. Method according to claim 8,
**characterized in that**
the reference trajectory data and/or the reference environmental data are further generated on the basis of additional data.

10. Method according to one of the preceding claims,
**characterized in that**
the reference trajectory data and/or the reference environmental data are further generated on the basis of the target trajectory (204) and/or the following vehicle environmental data.

11. Method according to one of the preceding claims,
**characterized in that**
the following vehicle (2) acquires the scout trajectory (201) via the following vehicle sensors (21).

12. System for automatically controlling at least one following vehicle (2) with a scout vehicle (1),
wherein the scout vehicle (1) comprises:
- a scout route mapper (12) by means of which a scout trajectory (201) for the scout vehicle (1) can be generated,
- a scout controller (13) by means of which the scout vehicle (1) can be driven along the scout trajectory (201), and
- scout sensors (11) by means of which scout environmental data (202) can be acquired;
wherein the following vehicle (2) comprises:
- a following vehicle route mapper (22) by means of which a target trajectory (204) for the following vehicle (2) can be generated,
- following vehicle sensors (21) by means of which the following vehicle environmental data (203) can be acquired, and
- a following vehicle controller (23) by means of which the following vehicle (2) can be driven along the target trajectory (204); wherein
- reference trajectory data can be generated by a computation unit on the basis of the scout trajectory (201), and reference environmental data can be generated on the basis of the scout environmental data (202),
- the reference trajectory data and the reference environmental data can be transmitted to the following vehicle (2),
- a trajectory similarity can be determined by means of a comparator via a trajectory comparison based upon the generated target trajectory (204) and the transmitted reference trajectory data, wherein it is possible to quantify whether and how sharply the target trajectory (204) and the scout trajectory (201) differ,
- an environmental similarity can be determined by means of the comparator via an environmental data comparison based upon the acquired following vehicle environmental data (203) and the transmitted reference environmental data, and
- an automatic control of the following vehicle (2) along the target trajectory (204) can be activated depending on the trajectory similarity and the environmental similarity.

13. System according to claim 12,
**characterized in that**
the scout controller (13) is formed in such a way that the scout vehicle (1) can be automatically driven by it.

14. Method according to one of claims 12 and 13,
**characterized in that**
a scout trajectory quality can also be determined by the scout route mapper (12), and
the automatic control of the following vehicle (2) can further be activated on the basis of the scout trajectory quality.

15. Method according to one of claims 12 through 14,
**characterized in that**
the system further comprises an external server (3), and
the scout trajectory (201), the scout environmental data (202), the target trajectory (204), and/or the follow vehicle environmental data can be transmitted to the external server (3).

## Revendications

1. Procédé de commande automatique d'au moins un véhicule suiveur (2), dans lequel
pour un véhicule scout (1), une trajectoire de scout (201) est générée et ledit véhicule scout (1) est guidé le long de ladite trajectoire du scout (201),
des données d'environnement du scout (202) étant détectées au moyen de capteurs du scout (11),
pour le véhicule suiveur (2), une trajectoire cible (204) est générée et, au moyen de capteurs de véhicule suiveur (21), des données d'environnement du véhicule suiveur (203) sont détectées,
à l'aide de la trajectoire du scout (201), des données de trajectoire de référence sont générées et, à l'aide des données d'environnement du scout (202), des données d'environnement de référence sont générées,
les données de trajectoire de référence et les données d'environnement de référence sont transmises au véhicule suiveur (2),
au moyen d'une comparaison de trajectoires, à l'aide de la trajectoire cible (204) générée et des données de trajectoire de référence transmises, une similitude de trajectoires est déterminée, l'existence éventuelle et le degré de la différence entre la trajectoire cible (204) et la trajectoire du scout (201) étant quantifiés,
au moyen d'une comparaison de données d'environnement, à l'aide des données d'environnement de véhicule suiveur (203) détectées et des données d'environnement de référence transmises, une similitude d'environnement est déterminée, et
en fonction de la similitude de trajectoire et de la similitude d'environnement, une commande automatique du véhicule suiveur (2) le long de la trajectoire cible (204) est activée.

2. Procédé selon la revendication 1,
**caractérisé en ce que**
lorsqu'aucune commande automatique du véhicule suiveur n'est activée, un mode de conduite sûr du véhicule suiveur (2) est activé.

3. Procédé selon une quelconque des revendications précédentes,
**caractérisé en ce que**
le véhicule scout (1) est commandé automatiquement.

4. Procédé selon une quelconque des revendications précédentes,
**caractérisé en ce que**
une qualité de trajectoire du scout est en outre déterminée, et
la commande automatique du véhicule suiveur (2) est en outre activée en fonction de la qualité de trajectoire du scout.

5. Procédé selon la revendication 4,
**caractérisé en ce que**
la trajectoire du scout (201) est générée à l'aide d'un système de traitement des images, la qualité de trajectoire étant déterminée par le système de traitement des images.

6. Procédé selon la revendication 4 ou 5,
**caractérisé en ce que**
la qualité de trajectoire du scout est déterminée en fonction de saisies d'un utilisateur.

7. Procédé selon une quelconque des revendications précédentes,
**caractérisé en ce que**
la trajectoire du scout (201), les données d'environnement du scout (202), la trajectoire cible (204) et/ou les données d'environnement du véhicule suiveur sont transmises à un serveur (3) externe.

8. Procédé selon la revendication 7,
**caractérisé en ce que**
les données de trajectoire de référence et/ou les données d'environnement de référence sont générées par le serveur (3) externe et
sont transmises du serveur (3) externe au véhicule suiveur (2).

9. Procédé selon la revendication 8,
**caractérisé en ce que**
les données de trajectoire de référence et/ou les données d'environnement de référence sont en outre générées en fonction de données supplémentaires.

10. Procédé selon une quelconque des revendications précédentes,
**caractérisé en ce que**
les données de trajectoire de référence et/ou les données d'environnement de référence sont en outre générées en fonction de la trajectoire cible (204) et/ou des données d'environnement du véhicule suiveur.

11. Procédé selon une quelconque des revendications précédentes,
**caractérisé en ce que**
le véhicule suiveur (2) détecte la trajectoire du scout (201) au moyen des capteurs du véhicule suiveur (21).

12. Système de commande automatique d'au moins un véhicule suiveur (2) comprenant un véhicule scout (1),
ledit véhicule scout (1) comprenant :
- une feuille de route du scout (12), au moyen de laquelle une trajectoire du scout (201) peut être générée pour le véhicule scout (1),
- un dispositif de commande du scout (13), au moyen duquel le véhicule scout (1) peut être guidé le long de la trajectoire du scout (201), et
- des capteurs du scout (11), au moyen desquels des données d'environnement du scout (202) peuvent être détectées ;
le véhicule suiveur (2) comprenant :
- une feuille de route du véhicule suiveur (22), au moyen de laquelle une trajectoire cible (204) peut être générée pour le véhicule suiveur (2),
- des capteurs du véhicule suiveur (21), au moyen desquels des données d'environnement de véhicule suiveur (203) peuvent être détectées, et
- un dispositif de commande du véhicule suiveur (23), au moyen duquel le véhicule suiveur (2) peut être guidé le long de la trajectoire cible (204) ;
dans lequel
- au moyen d'une unité de calcul, à l'aide de la trajectoire du scout (201), des données de trajectoire de référence peuvent être générées et, à l'aide des données d'environnement du scout (202), des données d'environnement de référence peuvent être générées,
- les données de trajectoire de référence et les données d'environnement de référence peuvent être transmises au véhicule suiveur (2),
- au moyen d'une unité de comparaison, au moyen d'une comparaison de trajectoires, à l'aide de la trajectoire cible (204) générée et des données de trajectoire de référence transmises, une similitude de trajectoires peut être déterminée, l'existence éventuelle et le degré de la différence entre la trajectoire cible (204) et la trajectoire du scout (201) étant quantifiés,
- au moyen de l'unité de comparaison, au moyen d'une comparaison de données d'environnement, à l'aide des données d'environnement de véhicule suiveur (203) détectées et des données d'environnement de référence transmises, une similitude d'environnement peut être déterminée, et
- en fonction de la similitude de trajectoire et de la similitude d'environnement, une commande automatique du véhicule suiveur (2) le long de la trajectoire cible (204) peut être activée.

13. Système selon la revendication 12,
**caractérisé en ce que**
le dispositif de commande du scout (13) est conçu de telle sorte que le véhicule scout (1) peut être guidé automatiquement par ledit dispositif.

14. Système selon l'une quelconque des revendications 12 et 13,
**caractérisé en ce que**
au moyen de la feuille de route du scout (12), une qualité de trajectoire du scout peut en outre être déterminée et
la commande automatique du véhicule suiveur (2) peut en outre être activée en fonction de la qualité de trajectoire du scout.

15. Système selon l'une quelconque des revendications 12 à 14,
**caractérisé en ce que**
ledit système comprend en outre un serveur (3) externe et
la trajectoire du scout (201), les données d'environnement du scout (202), la trajectoire cible (204) et/ou les données d'environnement du véhicule suiveur peuvent être transmises au serveur (3) externe.
